# EUROPÄISCHE PATENTSCHRIFT

(11) **EP 0 867 645 B1**
(45) Veröffentlichungstag und Bekanntmachung des Hinweises auf die Patenterteilung: **04.06.2003**
(21) Anmeldenummer: 98105298.8
(22) Anmeldetag: 24.03.1998
(51) Int. Cl.: F16J 15/12, F16J 15/08

(54) **Flachdichtung mit Gleiteigenschaften aufweisender Oberfläche**
Gasket with surface having enhanced sliding properties
Joint plat dont la surface présente des propriétés de glissement améliorées

(30) Priorität: 27.03.1997 DE 19713053
(43) Veröffentlichungstag der Anmeldung: 30.09.1998
(73) Patentinhaber: REINZ-DICHTUNGS-GMBH, 89233 Neu-Ulm (DE)
(72) Erfinder: Grafl, Dieter, Dr., 89081 Ulm (DE); Lemm, Markus, 89134 Herrlingen (DE); Popielas, Frank, 89250 Senden (DE); Weiss, Alfred, 89231 Neu-Ulm (DE)
(74) Vertreter: Pfenning, Meinig & Partner

(56) Entgegenhaltungen:
- EP-A- 0 506 996
- DE-A- 3 527 833
- DE-A- 3 802 090
- DE-A- 3 905 922
- DE-A- 4 110 798

## Beschreibung

Die Erfindung betrifft eine Flachdichtung, insbesondere eine Zylinderkopfdichtung, mit mindestens einer Metallage, die eine über eine Haftvermittlungsschicht aufgebrachte Elastomerbeschichtung aufweist, wobei die Haftvermittlungsschicht selbst Gleiteigenschaft verleihende Mittel enthält und/oder eine zusätzliche Gleitschicht aufweist.

Flachdichtungen, insbesondere Zylinderkopfdichtungen für Brennkraftmaschinen, werden zunehmend als Mehrlagenmetalldichtung ausgeführt und bestehen dabei üblicherweise aus einer bis vier Einzellagen. Zur Abdichtung der Medien werden dabei eine oder mehrere vorzugsweise aus Stahl bestehende Lagen, gesickt, gefalzt bzw. gekantet. Die Dichtflächen von derartigen Flachdichtungsmaterialien werden darüberhinaus zur Verbesserung ihrer Abdichtgüte mit ein- oder beidseitigen teil- oder ganzflächigen Beschichtungen aus polymeren Materialien versehen. Als polymere Materialien kommen dabei grundsätzlich Elastomere, Thermoplaste oder Duroplaste zum Einsatz, die sich beim Einbau unter der Dichtpressung noch verformen und dadurch an den korrespondierenden Dichtflächen gut anliegen und abdichten. Beispiele für derartige Polymermaterialien sind Fluor-Kautschuk, Polyimid, Kunstharz, Nitrilbutadien usw.

Aus der DE 39 05 922 ist es weiterhin bekannt, einer derartigen Polymerbeschichtung zusätzlich Festschmierstoffe zuzusetzen, um die Gleitreibung herabzusetzen. Als Festschmierstoffzuatz wird dabei ein Gemisch aus feinkörnigem bis pulvrigem Polytetrafluorethylen und feinkörnigem bis pulvrigem Molybdändisulfit vorgeschlagen.

In der DE 38 02 090 C2 wird ebenfalls eine Elastomerbeschichtung für Metalldichtungen beschrieben, wobei hier pulvrige mineralische Füllstoffe, beispielsweise Siliciumdioxid, Silikate oder Kaoline zur Herabsetzung der Gleitreibung vorgeschlagen werden.

Aus dem Stand der Technik ist es auch bekannt, zwischen eine wie vorstehend beschriebene Polymerbeschichtung und der obersten Metallage einer Metalldichtung noch zusätzlich eine Haftvermittlungsschicht aufzubringen, die unter den Betriebsbedingungen ein Ablösen der Elastomerbeschichtung verhindern soll. Derartige Haftvermittlungsschichten bestehen z.B. aus Silanen, Epoxi- oder Polyimid- oder Phenolharzen.

Es hat sich nun gezeigt, daß auch eine Elastomerbeschichtung mit Gleiteigenschaft verleihenden Mitteln und/oder mit einer zusätzlichen Haftschicht unter den herrschenden thermisch/mechanisch bedingten Relativbewegungen der Bauteile abgelöst wird oder aufplatzen kann. Dadurch kommt es dann zu einem direkten Kontakt zwischen der obersten Metallage und dem Bauteil, wodurch sich in der Metalldichtung und/oder dem Bauteil Rinnen, Furchen und/oder kleine Krater bilden, die die Dichteigenschaften wesentlich beeinflussen.

Aufgabe der vorliegenden Erfindung ist es deshalb, ausgehend von dem vorstehend beschriebenen Stand der Technik, eine Flachdichtung vorzuschlagen, bei der trotz Ablösen der Polymerbeschichtung eine Beschädigung der Bauteile bzw. der Dichtung nahezu vollständig verhindert wird.

Die Aufgabe wird durch die kennzeichnenden Merkmale des Anspruchs 1 gelöst. Die Unteransprüche zeigen vorteilhafte Weiterbildungen auf.

Die erfindungsgemäße Lösung schlägt somit einen anderen Weg ein, wie er bisher aus dem Stand der Technik bekannt war. Wie eingangs geschildert, ist bisher so vorgegangen worden, daß die Elastomerbeschichtung selbst mit Gleiteigenschaften verleihenden Mitteln versehen wurde. Die Haftvermittlungsschicht hatte dabei immer und ausschließlich die Aufgabe, einen festen Verbund zwischen der Elastomerbeschichtung und der Oberseite der Metallage herzustellen. Gemäß der vorliegenden Erfindung wird vorgeschlagen, daß zwischen der Elastomerbeschichtung und der Oberseite der Metalldichtung Gleiteigenschaften realisiert werden. Bei der erfindungsgemäßen Lösung übernimmt somit die Haftvermittlungsschicht - gegebenenfalls in Verbindung mit der separaten Gleitschicht/Trennschichtnoch zusätzlich die Aufgabe, die Gleitreibung herabzusetzen. Dies wird dadurch erreicht, daß der Haftvermittlungsschicht selbst Gleiteigenschaft verleihende Mittel zugesetzt werden, und/oder daß zwischen der Haftvermittlungsschicht und der Oberseite der Metallage noch mindestens eine zusätzliche Gleitschicht/Trennschicht aufgebracht oder ausgebildet wird.

Die Gleiteigenschaften zwischen der Elastomerbeschichtung und der Metallage werden somit nach der Erfindung dadurch realisiert, daß entweder die Haftvermittlungsschicht seibst Gleiteigenschaft verleihende Mittel enthält oder daß zwischen der Haftvermittlungsschicht mit oder ohne gleiteigenschaftsverleihende Mittel eine zusätzliche Gleitschicht/Trennschicht auf die Metallage aufgebracht wird.

Es hat sich überraschenderweise herausgestellt, daß selbst bei höchsten Anforderungen, wie sie in jüngster Zeit zunehmend bei der Leichtbauweise auftreten, keinerlei Abrieb und Verletzungen des metallischen Bauteils oder der Dichtungsoberfläche - auch unter Langzeitanwendungen - festgestellt wurden.

Bei der erfindungsgemäßen Flachdichtung ist es bevorzugt, wenn in der Haftvermittlungsschicht selbst gleiteigenschaftsverleihende Mittel eingebracht werden. Bevorzugt werden hierbei Festschmierstoffe usw. verwendet. Zusätzlich ist es auch möglich noch Vernetzungsmittel für die Elastomerbeschichtung wie z.B. Phosphoniumverbindungen zuzusetzen.

Als Festschmierstoffe können grundsätzlich alle aus dem Stand der Technik bekannten eingesetzt werden. Ein Überblick über derartige Festschmierstoffe ist aus **Braithwaite, E.R.:** "Solid Lubricants and Surfaces", Pergamon Press (1964), zu entnehmen. Bevorzugt sind MoS₂, Graphit, BN, CdS₂, PbS₂, PbS, PbO, ZnS, CaS, MoO₃ sowie weiche Metalle wie Au, Ag, Pt, Pb und Co. Geeignet sind auch viscoelastische Flüssigkeiten wie Metallsilicate und Metallphosphate.

Verfahrensmäßig wird dabei so vorgegangen, daß der Haftvermittlungsschicht selbst vor dem Auftrag die entsprechenden Festschmierstoffe mit einem Anteil von 0,5 bis 40 Gew.% zugesetzt werden. Die Haftvermittlungsschicht kann dann mit den an und für sich aus dem Stand der Technik bekannten Verfahren wie Spritzen, Tauchen, Zentrifugieren, Aufpinseln, Walzen oder Gießen aufgebracht werden.

Eine Variante besteht darin, daß der Haftvermittlungsschicht selbst organische Verbindungen zugesetzt werden, die dann unter Betriebsbedingungen mit der Oberfläche der Metalldichtung reagieren, so daß sich dann eine zusätzliche Gleitschicht ausbildet. Als organische Verbindungen kommen hierbei z.B. sog. EP-Additive in Frage, wie sie z.B. in "Tribology of thin Layers", TROBOLOGIY SERIES, 4, Elsevier S.P.C, 1980, beschrieben sind. Auch hier kann, wie bei dem Zusatz der Festschmierstoffe, so vorgegangen werden, daß diese organischen Verbindungen dem Haftvermittler vor dem Auftrag zugesetzt werden.

Eine weitere Möglichkeit, zwischen der Elastomerbeschichtung und der Oberseite der Metallfläche Gleiteigenschaften zu realisieren, besteht darin, daß zwischen der Elastomerbeschichtung und der Oberseite der Metallschicht mindestens eine zusätzliche Gleitschicht aufgebracht wird. Im einfachsten Fall kann eine derartige Gleitschicht eine Metallschicht, z.B aus Kupfer, Zink, Cadmium oder Blei sein. Derartige Gleitschichten aus Metall können z.B. mittels des bekannten Flammspritzens aufgebracht werden. Anstelle der Metallschichten können auch quasikristalline Schichten eingesetzt werden.

Geeignete quasikristalline Schichten sind z.B. in **Physica scripto**, Vol. T 49, 17-23, 1993, beschrieben.

Bevorzugte Beispiele sind: Al₆₅Cu₂₀Fe₁₅, Al₆₄Cu₁₈Fe₈Cr₈, Al₆₇Cu₉Fe_{10,5}Si₃ sowie icosahedrale AlCuLi, decagonale AlCuCrSi und AlRuCu. Die Dicke der zusätzlichen Gleitschicht sollte im Regelfall zwischen 1 und 50 µm, bevorzugt bis 30 µm, betragen.

Erfindungsgemäß kann auch eine anorganische Schicht durch Phosphatierung oder Nitridierung der Metalloberfläche erzeugt werden.

Die Haftvermittlungsschicht selbst besteht bei der erfindungsgemäßen Flachdichtung bevorzugt aus Silanen und/oder-Phenolharz und weist eine Dicke von 0,3 bis 30 µm auf.

Die Erfindung umfaßt nicht nur Einlagen- und Mehrlagenmetalldichtungen bei denen zumindest die Dichtflächen d.h. die in Richtung des Bauteils z.B. des Motorblocks weisenden Flächen den vorstehend beschriebenen Aufbau aufweisen, sondern z.B. auch Flachdichtungen die brennraumseitig eine U-förmige Einfassung aufweisen. Für diesen Fall ist dann die U-förmige Einfassung wie vorstehend beschrieben, aufgebaut.

## Patentansprüche

1. Flachdichtung, insbesondere Zylinderkopfdichtung, für Brennkraftmaschinen mit mindestens einer Metallage und einer ein- oder beidseitig, ganz- oder teilflächig über eine Haftvermittlungsschicht aufgebrachten Elastomerbeschichtung,
**dadurch gekennzeichnet,**
**daß** die Haftvermittlungsschicht Gleiteigenschaft verleihende Mittel enthält, oder
**daß** zwischen der Haftvermittlungsschicht mit und/oder ohne Gleiteigenschaft verleihenden Mitteln und der Oberseite der Metallage mindestens eine zusätzliche Gleitschicht oder Trennschicht vorhanden ist.

2. Flachdiehtung nach Anspruch 1,
**dadurch gekennzeichnet, daß** die Haftvermittlungsschicht Festschmierstoffe enthält.

3. Flachdichtung nach Anspruch 2,
**dadurch gekennzeichnet, daß** die Festschmierstoffe strukturwirksame Festschmierstoffe, mechanisch wirksame Festschmierstoffe, Metallseifen oder chemisch aktive Festschmierstoffe sind.

4. Flachdichtung nach Anspruch 1,
**dadurch gekennzeichnet, daß** die Haftvermittlungsschicht organische Verbindungen enthält, die unter Betriebsbedingungen mit der Oberfläche der Metalldichtung reagieren können, so daß sich eine zusätzliche Gleitschicht ausbildet.

5. Flachdichtung nach Anspruch 4,
**dadurch gekennzeichnet, daß** die organischen Verbindungen Fettsäuren, Ester, Chlor, Schwefel, schwefelhaltige Fettsäureester und/oder Phosphorverbindungen wie Metallthiophosphate sind.

6. Flachdichtung nach Anspruch 1,
**dadurch gekennzeichnet, daß** zwischen der Haftvermittlungsschicht mit oder ohne Gleiteigenschaft verleihenden Mitteln und der Oberseite der Metallage als zusätzliche Gleitschicht eine Metallschicht oder quasikristalline Schicht angeordnet oder als Trennschicht eine anorganische Schicht durch Phosphatierung oder Nitridierung aufgebracht ist.

7. Flachdichtung nach Anspruch 6,
**dadurch gekennzeichnet, daß** die Metallschicht aus Zink, Cadmium, Kupfer oder Blei besteht.

8. Flachdichtung nach mindestens einem der Ansprüche 1 bis 7,
**dadurch gekennzeichnet, daß** die zusätzliche Schicht eine Dicke von 1 bis 50 µ aufweist.

9. Flachdichtung nach mindestens einem der Ansprüche 1 bis 8,
**dadurch gekennzeichnet, daß** die Haftvermittlerschicht aus Silanen, Epoxidharzen, Polyimidharzen oder Phenolharzen besteht.

10. Flachdichtung nach mindestens einem der Ansprüche 1 bis 9,
**dadurch gekennzeichnet, daß** die Haftvermittlerschicht eine Dicke von 0,1 bis 30 µm hat.

## Claims

1. A flat-gasket, in particular a cylinder-head gasket, for internal-combustion engines with at least one layer of metal and a coating of an elastomer applied on one or both sides and over the whole or part of the surface by way of a layer of bonding-agent, **characterized in that** the layer of bonding-agent contains agents imparting a sliding property, or at least one additional sliding layer or separating layer is present between the layer of bonding-agent with and/or without agents imparting a sliding property and the top side of the layer of metal.

2. A flaf gasket according to Claim 1, **characterized in that** the layer of bonding-agent contains solid lubricants.

3. A flat gasket according to Claim 2, **characterized in that** the solid lubricants are structurally effective solid lubricants, mechanically effective solid lubricants, metallic soaps or chemically active solid lubricants.

4. A flat gasket according to Claim 1, **characterized in that** the layer of bonding-agent contains organic compounds which can react with the surface of the metallic. gasket under operational conditions, so that an additional sliding layer is formed.

5. A flat gasket according to Claim 4, **characterized in that** the organic compounds are fatty acids, esters, chlorine, sulphur, sulphur-containing fatty-acid esters and/or phosphorus compounds such as metallic thiophosphates.

6. A flat gasket according to Claim 1, **characterized in that** a layer of metal or a quasi-crystalline layer is arranged between the layer of bonding-agent with or without agents imparting a sliding property and the top side of the layer of metal as an additional sliding layer, or an inorganic layer is applied by phosphatizing or nitridizing as a separating layer.

7. A flat gasket according to Claim 6, **characterized in that** the layer of metal consists of zinc, cadmium, copper or lead.

8. A flat gasket according to at least one of Claims 1 to 7, **characterized in that** the additional layer has a thickness of from 1 to 50 µ.

9. A flat gasket according to at least one of Claims 1 to 8, **characterized in that** the layer of bonding-agent consists of silanes, epoxy resins, polyimide resins or phenol resins.

10. A flat gasket according to at least one of Claims 1 to 9, **characterized in that** the layer of bonding-agent has a thickness of from 0·1 to 30 µm.

## Revendications

1. Joint plat, en particulier joint de tête de cylindre, pour moteurs à combustion interne, ayant au moins une couche métallique et un revêtement d'élastomère appliqué sur une ou deux faces, sur tout ou partie de la surface, via une couche d'agent adhésif,
**caractérisé en ce que** la couche d'agent adhésif contient des agents conférant des propriétés de glissement ou **en ce qu'**entre la couche d'agent adhésif avec ou sans les agents conférant les propriétés de glissement et la face supérieure de la couche métallique, il y a au moins une couche de glissement supplémentaire ou une couche de séparation.

2. Joint plat selon la revendication 1,
**caractérisé en ce que** la couche d'agent adhésif contient des lubrifiants solides.

3. Joint plat selon la revendication 2,
**caractérisé en ce que** les lubrifiants solides sont des lubrifiants solides structurellement efficaces, des lubrifiants solides mécaniquement efficaces, des savons métalliques ou des lubrifiants solides chimiquement actifs.

4. Joint plat selon la revendication 1,
**caractérisé en ce que** la couche d'agent adhésif contient des composés organiques, qui, dans les conditions d'exploitation, peuvent réagir avec la surface du joint métallique de manière à former une couche de glissement supplémentaire.

5. Joint plat selon la revendication 4,
**caractérisé en ce que** les composés organiques sont des acides gras, des esters, du chlore, du soufre, des esters d'acides gras contenant du soufre et/ou des composés de phosphore tels que des thiophosphates métalliques.

6. Joint plat selon la revendication 1,
**caractérisé en ce que**, entre la couche d'agent adhésif avec ou sans agents conférant des propriétés de glissement et la surface de la couche métallique, est ajoutée comme couche de glissement supplémentaire une couche métallique ou une couche quasi-cristalline et est appliquée comme couche de séparation une couche inorganique par phosphatation ou nitruration.

7. Joint plat selon la revendication 6,
**caractérisé en ce que** la couche métallique est constituée de zinc, de cadmium, de cuivre ou de plomb.

8. Joint plat selon au moins l'une des revendications 1 à 7,
**caractérisé en ce que** la couche supplémentaire a une épaisseur de 1 à 50 µm.

9. Joint plat selon au moins l'une des revendications 1 à 8,
**caractérisé en ce que** la couche d'agent adhésif est constituée de silanes, de résines époxy, de résines de polyimides ou de résines phénoliques.

10. Joint plat selon au moins une des revendications 1 à 9,
**caractérisé en ce que** la couche d'agent adhésif a une épaisseur de 0,1 à 30 µm.
